# EUROPÄISCHE PATENTANMELDUNG

(11) **EP 3 708 047 A2**
(43) Veröffentlichungstag der Anmeldung: **16.09.2020**
(21) Anmeldenummer: 20163401.1
(22) Anmeldetag: 16.03.2020
(51) Int. Cl.: A47J 37/07, A47J 36/38

(54) **GRILLGERÄT, INSBESONDERE GASGRILLGERÄT**

(30) Priorität: 14.03.2019 DE 202019101467 U
(71) Anmelder: reamotion GmbH, 27753 Delmenhorst (DE)
(72) Erfinder: Reales Bertomeo, Emilio, 27753 Delmenhorst (DE)
(74) Vertreter: Eisenführ Speiser

(57) **Zusammenfassung**

Die Erfindung betrifft ein Grillgerät (1), mit wenigstens einer Grilleinheit (2, 4), insbesondere Gasgrilleinheit, zum Garen von Lebensmitteln, und einem Ständer (6), der die Grilleinheit (2, 4) trägt, wobei die Grilleinheit (2, 4) eine Grillschale (28, 30) mit einer Brenneinheit aufweist. Erfindungsgemäß ist wenigstens eine Zusatz-Grilleinheit (24, 26) an der Grillschale (28, 30) vorgesehen, welche ein Heizelement aufweist, welches dazu eingerichtet ist, das Lebensmittel von seiner Oberseite aus zu grillen.

## Beschreibung

Die Erfindung betrifft ein Grillgerät mit wenigstens einer Grilleinheit, insbesondere Gasgrilleinheit, zum Grillen von Lebensmitteln, und einem Ständer, der die Grilleinheit trägt, wobei die Grilleinheit eine Grillschale mit einer Brenneinheit aufweist.

Derartige Grillgeräte, auch als Grillstationen bezeichnet, sind bekannt. Diese werden häufig im Privatbereich oder auch im semiprofessionellen oder professionellen Gastronomiebereich, auf Terrassen oder in Gärten eingesetzt. Der Ständer ist oft mit Rädern versehen, um das Grillgerät auf einer Terrasse oder dergleichen verfahren zu können. Andere Ausführungsformen umfassen einen Ständer, der trumpfförmig ist, und einen in dem Ständer untergebrachten Unterschrank.

Insbesondere betrifft die Erfindung ein Gasgrillgerät, bei dem die Grilleinheit als Gasgrilleinheit ausgebildet ist. Derartige Gasgrillgerät erfreuen sich besonderer Beliebtheit, da sie einen guten Geschmack bieten, es für das Grillen einem geringen Aufwand bedarf und diese zudem reinigungsarm sind.

Aus WO 2018/007467 A1 ist beispielsweise ein solches Gasgrillgerät der vorbezeichneten Gattung bekannt.

Aufgabe der vorliegenden Erfindung ist es, ein bekanntes Grillgerät insbesondere im Hinblick auf seine Einsatzmöglichkeiten, weiter zu verbessern.

In einem ersten Aspekt der Erfindung wird die Aufgabe bei einem Grillgerät der vorbezeichneten Art dadurch gelöst, dass der Grilleinheit eine Abluftreinigungseinrichtung zum Abführen von während des Garprozesses entstehenden Zubereitungs-Dämpfen oder Rauchgasen in Form eines Abluftstromes zugeordnet ist. Der Erfindung liegt die Erkenntnis zugrunde, mit Hilfe einer Abluftreinigungseinrichtung fetthaltige und geruchsintensive Dämpfe oder gegebenenfalls entstehende Rauchgase, die beim Zubereiten der Lebensmittel entstehen, bereits während des Grillprozesses im Bereich der Grilleinheit effektiv abzusaugen. Damit ist die Geruchsbelästigung während des Grillens der Lebensmittel deutlich reduziert, weshalb ein solches Grillgerät bzw. eine solche Grillstation auch in einem überdachten Bereich eingesetzt werden kann. Mit dem Absaugen während des Grillvorganges kommt es vornehmlich zu keiner oder nur zu einer äußert geringen Geruchsbelästigung von etwaigen, sich im Nahbereich des Grillgerätes aufhaltenden Personen.

Gemäß einer bevorzugten Weiterbildung des Grillgerätes ist die Abluftreinigungseinrichtung in dem Ständer oder außenseitig an dem Ständer angeordnet, wobei bevorzugt im Ständer ein Unterschrank untergebracht ist. Mit dem Anordnen im Inneren des Ständers ist die Abluftreinigungseinrichtung platzsparend und gegen mögliche Umwelteinflüsse oder etwaige Einwirkungen von außen geschützt aufgenommen. Mit der Ausgestaltung eines Unterschranks im Ständer ist die Abluftreinigungseinrichtung für mögliche Wartungs- und Instandhaltungszwecke einfach zugänglich. Die Zugänglichkeit des Unterschranks ist beispielsweise über das Vorsehen einer Schwenktür am Ständer des Grillgerätes bewirkt.

Bevorzugt weist die Abluftreinigungseinrichtung zumindest einen Abluftkanal mit einem Ventilator zum Abführen der Abluft von der Grilleinheit auf, wobei bevorzugt innerhalb des Abluftkanals zumindest ein elektrostatischer Filter und/oder eine Plasmakammer zur Abluftreinigung angeordnet ist. Über den im Abluftkanal angeordneten elektrostatischen Filter und/oder die Plasmakammer können Geruchspartikel oder auch im Abluftstrom enthaltene Schadstoffe, wie beispielsweise Rußpartikel, nahezu rückstandslos aus dem Abluftstrom herausgefiltert werden, wodurch zumindest die Geruchsbelästigung auf ein Minimum reduziert ist. Bevorzugt wird mit der erfindungsgemäßen Abluftreinigungseinrichtung der Abluftstrom so aufgearbeitet, dass keine Schadstoffe mehr darin enthalten sind. Das erfindungsgemäße Grillgerät kann somit auch als Indoor-Grillgerät eingesetzt werden.

In einem weiteren Aspekt der Erfindung bzw. einer bevorzugten Weiterbildung des Grillgerätes nach Anspruch 1 ist wenigstens eine Zusatz-Grilleinheit an der zumindest einen Grillschale vorgesehen, welche ein Heizelement aufweist, das dazu eingerichtet ist, das Lebensmittel von seiner Oberseite aus zu grillen. Mittels der von oben auf das Lebensmittel einwirkenden Zusatz-Grilleinheit ist zum einen eine gleichmäßige Bräunung an dessen unverdeckter Oberfläche möglich. Bevorzugt wird die Oberseite durch keine das Lebensmittel tragenden Bestandteile, wie einem Gitterrost, verdeckt. Zum anderen kommen keine beim Grillvorgang entstehenden Rückstände direkt mit dem darüber angeordneten Heizelement der Zusatz-Grilleinheit in Kontakt. Damit ist eine mögliche Beeinträchtigung des Lebensmittels durch gegebenenfalls sonst in Kontakt mit dem Heizelement kommender und dadurch verbrennender Rückstande vermieden.

Vorzugsweise ist die Zusatz-Grilleinheit als ein auf die Grillschale aufsteckbarer Beefer-Aufsatz ausgebildet, welcher bevorzugt wenigstens einen Gasanschluss aufweist. Der Beefer-Aufsatz ist bevorzugt steckbar an dem erfindungsgemäßen Grillgerät angeordnet, der bei Bedarf mit dem erfindungsgemäßen Grillgerät einfach gekoppelt und auch wieder an diesem entfernt werden kann. Der Beefer-Aufsatz weist einen Gasanschluss auf, der beim Aufstecken des Beefer-Aufsatzes selbsttätig gasleitend mit einem an der Grillschale angeordneten Anschlussteil verbunden wird.

Der Beefer-Aufsatz weist bevorzugt mehrere übereinander angeordnete Einschübe für ein das zu grillende Lebensmittel von der Unterseite tragendes Auflageteil auf. Somit kann das Lebensmittel in unterschiedlichen Abständen zum Heizelement des Beefer-Aufsatzes innerhalb der Zusatz-Grilleinheit angeordnet und der Wärmeeintrag in die Oberfläche des zu grillenden Lebensmittels angepasst werden.

Gemäß einer alternativen oder optionalen Ausgestaltung der vorliegenden Erfindung ist die Zusatz-Grilleinheit als Infrarot-Strahler ausgebildet, der an einer Innenseite eines Deckels angeordnet ist, mittels dessen die Grillschale an ihrer Oberseite zumindest bereichsweise abdeckbar ist. Mit dem Infrarot-Strahler, welcher in einer bevorzugten Ausführung elektrisch betrieben wird, ist der Indoor-Betrieb des erfindungsgemäßen Grillgerätes weiter verbessert. Zudem ist mittels des Deckels, der die Grilleinheit zumindest bereichsweise abdeckt, eine effiziente Nutzung der mittels des Infrarot-Strahlers erzeugten Wärmeenergie bewirkt. Ferner ist durch den geschlossenen Deckel das Aufsteigen der beim Grillvorgang entstehenden Dämpfe in die Umgebung vermindert.

Gemäß einer bevorzugten Ausgestaltung des erfindungsgemäßen Grillgerätes ist die Zusatz-Grilleinheit abluftleitend mit der Abluftreinigungseinrichtung verbunden, wobei bevorzugt oberhalb der Zusatz-Grilleinheit eine Absaugung mit einer nach unten gerichteten Absaugöffnung angeordnet ist. Insbesondere die als Beefer-Aufsatz ausgebildete Grilleinheit weist eine ihr zugeordnete Absaugung auf. Die Absaugung, ähnlich einer Absaugglocke, weist eine nach unten gerichteten Absaugöffnung auf, welche zumindest bereichsweise von oben über die Zusatz-Grilleinheit geschoben ist. Auch seitlich aus dem Beefer-Aufsatz austretende fetthaltige oder geruchsintensive Dämpfe können mittels der Abluftreinigungseinrichtung abgeführt werden. Vorzugsweise weist gemäß einer weiteren Ausführungsform des erfindungsgemäßen Grillgerätes eine der Grillschalen einen oder mehrere mit der Abluftreinigungseinrichtung fluidleitend verbundene Einlässe auf, die außenseitig um die Grilleinheit herum angeordnet sind, an der der Deckel mit dem Infrarot-Strahler als Zusatz-Grilleinheit vorgesehen ist. Bevorzugt sind die Abluft-Einlässe benachbart zu den Randbereichen des Deckels angeordnet, wenn dieser in seiner geschlossenen Position ist.

Gemäß einer weiteren bevorzugten Ausführungsform oder einem weiteren Aspekt der Erfindung weist ein Grillgerät nach der eingangs genannten Art an einem Kopfende des Ständers eine zentrale Arbeitseinheit auf, sowie zwei Grilleinheiten, die seitlich von der Arbeitseinheit im Wesentlichen gegenüberliegend zueinander an dem Ständer befestigt sind, wobei jede Grilleinheit an den Grillschalen eine Brenneinheit aufweist.

Die einzelnen Grilleinheiten sind beispielsweise durch Einhängen, formschlüssig mit dem Ständer verbunden. Dadurch lassen sich diese reversibel abnehmen und separat verstauen und/oder reinigen.

Die zentrale Arbeitseinheit weist vorzugsweise eine Arbeitsplatte, einen separaten Gasgrill, einen Elektrogrill, ein Kochfeld, einen Tellerspeicher oder dergleichen auf. In üblichen Ausführungsformen wird die zentrale Arbeitseinheit eine Arbeitsplatte umfassen.

Das Vorsehen von zwei separaten Grilleinheiten hat den Vorteil, dass diese mit verschiedenen Brennstoffen betrieben werden können. Beispielsweise wird eine erste Grilleinheit mit Gas betrieben, während in der anderen Holzkohle verwendet wird. Die Holzkohle wird dazu bevorzugt in einen dafür vorgesehenen Korb gegeben, der in die entsprechende Grillschale eingesetzt wird. So kann mir einem Grillgerät auf verschiedene Geschmäcker reagiert werden. Auf ähnlich Weise kann auch eine Grilleinheit nur für vegetarisches Grillgut verwendet werden, während die andere Grilleinheit für Fleischprodukte bestimmt ist. Dies führt zu einer sogar räumlich vollständigen Trennung der Nahrungsmittel und wird dem religiösen oder ethischen Bedürfnissen mancher Bediener gerecht.

Ferner ist an dieser Anordnung besonders vorteilhaft, dass mittig, zwischen den beiden Grilleinheiten die zentrale Arbeitseinheit angeordnet ist. So steht ein Bediener der Grillvorrichtung nicht unmittelbar vor den heißen Grilleinheiten, sondern vor der Arbeitseinheit. Dies ist einerseits aufgrund der geringeren Wärme angenehm und lässt zudem ein einfacheres Arbeiten an der Arbeitseinheit zu.

Gemäß einer Weiterbildung des Grillgerätes ist in dem Unterschrank eine Kühleinheit zum Kühlen von rohem Grillgut angeordnet ist. Die Kühleinheit ist vorzugsweise als verschließbarer Kühlschrank oder verschließbares Kühlfach ausgebildet und weist im Inneren seitliche Führungsschienen und Aufnahmen zum Führen eines Blechs oder einer Platte auf. Das Blech oder die Platte kann dann von einem Bediener in die Kühleinheit eingeschoben bzw. aus ihr herausgezogen werden. Das Blech oder die Platte dient zur Aufnahme von rohem Grillgut und dieses kann in der Kühleinheit vor dem Grillen gelagert werden. Der Kühlschrank oder das Kühlfach kann mit einer separaten Tür versehen sein, oder die Tür ist integral mit einer Tür des Unterschranks.

In einer bevorzugten Ausführungsform weist das Grillgerät der eingangs genannten Art in dem Unterschrank eine Warmhalteeinheit zum Warmhalten von Grillgut auf. Die Warmhalteeinheit weist vorzugsweise einen Wärmeschrank oder ein Wärmefach auf. Die Warmhalteeinheit dient dazu, bereits gegrilltes Grillgut warmzuhalten und ggf. auch zum Nachgaren von angegrillten Lebensmitteln. Besonders bevorzugt ist hierbei das Grillgerät als Gasgrillgerät ausgebildet. Vorzugsweise ist der Wärmeschrank oder das Wärmefach derart mit der Grilleinheit verbunden, dass warme Luft von der Grilleinheit in das Wärmefach geführt wird. Diese warme Luft kann Abluft sein, die Verbrennungsgase enthält, oder Luft, die mittels Konvektion an einer Außenseite der Grilleinheit aufgewärmt ist. Bevorzugt ist die Warmhalteeinheit benachbart zu der Kühleinheit, insbesondere unterhalb dieser, in dem der Unterschrank angeordnet.

Auch die Warmhalteeinheit beinhaltet vorzugsweise im Inneren seitliche Führungsschienen und Aufnahmen zum Führen eines Blechs oder einer Platte, derart, dass das Blech oder die Platte von einem Bediener in die Warmhalteeinheit eingeschoben bzw. aus ihr herausgezogen werden kann. Hierdurch ist die Bedienung sehr einfach. Es kann vorgesehen sein, dass insbesondere Rauchgase in die Warmhalteeinheit geleitet werden, um die Warmhalteeinheit nach Art eines "Smokers" zu betreiben.

In einer weiteren bevorzugten Ausführungsform oder in einem weiteren Aspekt der Erfindung weist das Grillgerät eine Gasflaschenaufnahme zum Tragen einer Gasflasche zum Zuführen von Brenngas zu der Grilleinheit auf, wobei die Gasflaschenaufnahme eine Wiegeeinheit zum Wiegen der Gasflasche aufweist. Ist ein Grillgerät als Gasgrillgerät ausgebildet, ist bekannt, eine Gasflaschenaufnahme zum Tragen der Gasflasche vorzusehen. Die Gasflaschenaufnahme ist vorzugsweise ebenfalls in dem Unterschrank bzw. in dem Ständer untergebracht. Erfindungsgemäß weist die Gasflaschenaufnahme eine Wiegeeinheit zum Wiegen der Gasflasche auf. Die Gasflaschenaufnahme ist bevorzugt in einer Schublade untergebracht, die mit einem Rastmechanismus und einer Druckfeder ausgestattet ist. Durch Drücken des Rastmechanismus wird dieser freigegeben und die Schublade fährt samt Gasflasche selbsttätig aus dem Unterschrank heraus. Es ist also einfach die Gasflasche zu wechseln. Ein Bediener drückt beispielsweise kurz mit seinem Fuß gegen die Schublade, um den Rastmechanismus zu lösen.

Bevorzugt weist das Grillgerät ferner eine Steuereinheit auf, die mit der Wiegeeinheit verbunden ist. Die Steuereinheit ist dabei dazu eingerichtet, Signale von der Wiegeeinheit zu empfangen, wobei die Signale das Gewicht der Gasflasche repräsentieren. Die Steuereinheit bestimmt dann basierend auf diesen Signalen das Gasvolumen in der Gasflasche. Das Gewicht der Gasflasche ohne Gas ist bekannt und durch Wiegen des Gesamtgewichts der Gasflasche samt Gas und dem bekannten Gewicht der Gasflasche ohne Gas ist das Gewicht des Gases in der Gasflasche bestimmbar. Hierdurch ist auch das Gasvolumen der Gasflasche bestimmbar. Auf handelsüblichen Gasflaschen ist das Taragewicht angegeben. Es kann vorgesehen sein, dass ein Bediener dieses Taragewicht über eine entsprechende Eingabeeinrichtung in die Steuereinheit eingibt, oder die Steuereinheit über geeignete Lesemittel, etwa eine Kamera oder einen Barcodescanner, das Taragewicht selbststätig ausliest.

Bevorzugt ist die Steuereinheit ferner dazu eingerichtet, basierend auf den Signalen der Wiegeeinheit eine Restbrenndauer der Grilleinheit zu bestimmen. Bei bekanntem aktuellen Gasverbrauch und bekanntem Gasvolumen kann auch die Restbrenndauer bestimmt werden. Vorzugsweise werden mehrere Restbrenndauern, basierend auf verschiedenen Szenarien bestimmt. Beispielsweise umfasst ein Szenario ein Minimalszenario, in dem ein minimaler Gasverbrauch zugrunde gelegt wird, falls ein Bediener die Flamme der Grilleinheit auf ein Minimum herunter regelt. Ein weiteres Szenario umfasst ein Maximalszenario, in dem ein Bediener die Gasflamme der Grilleinheit maximal herauf regelt.

Bevorzugt weist die Steuereinheit ein Display auf und ist dazu eingerichtet, das Gasvolumen und/oder die Restbrenndauer auf dem Display anzuzeigen. Die Restbrenndauer wird bevorzugt in den verschiedenen Szenarien angezeigt. Hierdurch erhält ein Bediener die Information, wie lange er noch, unter Zugrundelegung eines entsprechenden Szenarios, grillen kann.

In einer weiteren bevorzugten Ausführungsform ist die Steuereinheit dazu eingerichtet, kabellos mit einem tragbaren Mobilgerät, insbesondere einem Tablet-PC oder einem Smartphone, verbunden zu werden. Vorzugsweise werden das Gasvolumen und/oder die Restbrenndauer auf einem Display des tragbaren Mobilgeräts angezeigt. Ferner ist die Steuereinheit dazu eingerichtet, Steuerbefehle von dem tragbaren Mobilgerät zu empfangen und in Antwort entsprechende Stellenmaßnahmen vorzusehen. Ist das Grillgerät als Gasgrillgerät ausgebildet, sind vorzugsweise zwischen der Gasflasche und entsprechenden Brennstäben der Grilleinheiten ein oder mehrere Ventile vorgesehen. Das oder die Ventile sind vorzugsweise mit der Steuereinheit verbunden und die Steuereinheit stellt das oder die Ventile in Antwort auf empfangene Steuerbefehle, um so die Gaszufuhr in Übereinstimmung mit den Steuerbefehlen zu drosseln. Hierdurch ist es möglich, dass ein Bediener das Grillgerät von einem entfernten Standpunkt aus bedient.

Vorzugsweise kommunizieren das tragbare Mobilgerät und die Steuereinheit mittels einer Funkverbindung, beispielsweise basierend auf dem Bluetooth®-Standard, W-Lan-Standard, und/oder über das Internet. Ist beispielsweise die Steuereinheit mit dem Internet verbunden, kann auch das tragbare Mobilgerät mit dem Internet verbunden sein und auf diesem Weg Signale an die Steuereinheit senden.

Die Grillschalen sind vorzugsweise jeweils mittels einer Haube vollständig geschlossen abdeckbar, wobei die Hauben bevorzugt jeweils schwenkbar an der entsprechenden Grilleinheit befestigt sind, und vorzugsweise eine Dämpfungseinrichtung zum Dämpfen der Bewegung der Hauben vorgesehen ist. Die Hauben können auch vollständig separat und als einfache Deckel ausgebildet sein. Sind die Hauben mittels einer Dämpfungseinrichtung befestigt, ist die Dämpfungsvorrichtung vorzugsweise innenliegend angeordnet. Die Dämpfungseinrichtung dient auch dazu, die Hauben in einer vertikal offenen Position zu halten, sodass ein Grillen ungehindert durchgeführt werden kann.

In einer bevorzugten Weiterbildung sind die Grillschalen halbkugelförmig, wannenförmig, rechteckig kastenförmig, quadratisch kastenförmig, zylindrisch mit geschlossenem Boden, konisch nach unten zulaufend, oder kegelstumpfförmig nach unten zulaufend, ellipsoid oder dergleichen ausgebildet. Es soll verstanden werden, dass jegliche Form vorgesehen sein kann, wobei sich eine halbkugelförmige Form daher anbietet, da sie einfach zu reinigen ist und einen optisch guten Gesamteindruck, ähnlich eines Panoptikums, hervorruft.

Weiterhin sind vorzugsweise die Brenneinheiten in den Grillschalen auswechselbar, zum Wechseln der Energiequelle. Die Brenneinheiten umfassen eine oder mehrere Brennleisten, in denen Brenngas geführt wird und aus denen Brenngas austreten kann. Vorzugsweise sind die Brenneinheiten abnehmbar, und beispielsweise durch einen Korb oder dergleichen ersetzbar, sodass die Grillschalen auch zum Grillen mittels Kohle, Pellets, Briketts oder dergleichen verwendet werden können. So ist im Betrieb beispielsweise eine erste Grillschale mittels Gas betreibbar, während eine zweite Grillschale mittels Kohle betrieben wird. Wird die Gasbrenneinheit in der Grillschale belassen und der Korb mit Kohle nur aufgesetzt hat dies den Vorteil, dass die Gasbrenneinheit zum Entflammen der Kohle genutzt werden kann und nicht auf Spiritus oder dergleichen zurückgegriffen werden muss. Eine weiter Ausführungsform des Grillgerätes sieht das Betreiben von insbesondere der als Infrarot-Strahler ausgebildeten Zusatz-Grilleinheit mit elektrischen Strom vor.

Weiterhin ist bevorzugt, dass das Grillgerät eine Mechanikeinheit aufweist, mittels der die beiden Grillschalen zusammen schiebbar und/oder klappbar sind, um gemeinsam einen wesentlich geschlossenen Raum zu bilden. In diesem geschlossenen Zustand ist der Innenbereich der Grillschalen geschlossen und beispielsweise gegen Eintritt von Regenwasser weitgehend geschützt. Ferner wird so auch ein Grillrost oder dergleichen, welches in den Grillschalen angeordnet ist, vor Verschmutzung geschützt. Die Mechanikeinheit umfasst vorzugswiese Scharniere und/oder Führungsschienen.

In einer weiteren bevorzugten Ausführungsform weist das Grillgerät ein Einsatzelement auf, welches zwischen den Grillschalen anordenbar ist und eine Mehrzahl an Durchtrittsöffnungen aufweist. Das Einsatzelement verbindet in dem geschlossenen Zustand vorzugsweise die umlaufenden Kanten der Grillschalen und hält die beiden Grillschalen leicht beabstandet voneinander. Die Durchtrittsöffnungen dienen dazu, dass Luft durch das Einsatzelement hindurchtreten kann. Das Einsatzelement kann entsprechend eines Gitters ausgebildet sein. Wird in diesem zusammengeklappten Zustand das Grillgerät mit Gas betrieben, kann heiße Luft durch das Einsatzelement austreten und das Grillgerät kann auf diese Weise als Terrassenstrahler verwendet werden. Es kann auch vorgesehen sein, dass zwei Einsatzelemente vorgesehen sind, die jeweils dauerhaft an oberen Rändern der Grillschalen angeordnet sind. Alternativ oder zusätzlich ist kein Einsatzelement vorgesehen, sondern die Grillschalen weisen selber Durchtrittsöffnungen auf, die verschließbar sind. Auch auf diese Weise kann das Grillgerät als Terrassenstrahler verwendet werden.

In einer weiteren bevorzugten Ausführungsform oder einem weiteren Aspekt der Erfindung weist das Grillgerät eine Spülvorrichtung zum Spülen und Reinigen des Grillgeräts auf. Vorzugsweise weist die Spülvorrichtung jeweils wenigstens ein Spülelement in jeder Grillschale auf. Die Spülelemente sind bevorzugt drehend. Ein derartiges Spülelement ist beispielsweise als drehende Düse, oder entsprechend einem Flügel einer herkömmlichen Geschirrspülmaschine ausgebildet. Bevorzugt sind die Spülelemente aus feuerfestem Material, wie beispielsweise Metall gebildet. Die gesamte Spülvorrichtung ist vorzugsweise entsprechend üblichen Geschirrspülmaschinen aufgebaut.

In einem Zustand des Grillgeräts, in dem dieses für den Grillbetrieb ausgelegt ist, sind die Grillschalen vorzugsweise mit einer wärmeisolierenden Platte ausgelegt. Die wärmeisolierende Platte ist in einer Variante nur in einem Bodenbereich der Grillschale vorgesehen und dient zum Abdecken der Spülelemente. Eine solche wärmeisolierende Platte ist beispielsweise als Sandwich-Platte ausgebildet und kann manuell herausgenommen werden, wenn ein Spülbetrieb vorgesehen ist.

Die Spülvorrichtung weist vorzugsweise eine eigene Steuereinheit auf, oder ist mit der Steuereinheit des Grillgeräts gekoppelt. Die Spülvorrichtung weist bevorzugt einen eigenen Stromanschluss auf, mittels dem die Spülvorrichtung an ein übliches Netz anschließbar ist.

Die Spülvorrichtung verfügt weiterhin bevorzugt über einen Wassertank, der insbesondere einen Brauchwasserbehälter sowie einen Frischwasserbehälter umfasst. Der Frischwasserbehälter ist bevorzugt mit Frischwasser gefüllt, welches zum Spülen verwendet wird. Alternativ oder zusätzlich kann die Spülvorrichtung an eine Wasserquelle angeschlossen sein, wie beispielsweise an einem Gartenschlauch. Ein entsprechendes Ventil und ein Einlass sind bevorzugt an dem Grillgerät vorgesehen. Weiterhin ist der Brauchwasserbehälter vorgesehen, schmutziges, zum Spülen bereits verwendetes Wasser, aufzunehmen. Sowohl der Brauchwasserbehälter als auch der Frischwasserbehälter sind bevorzugt in dem Ständer und/oder dem Unterschrank angeordnet. Die Spülvorrichtung umfasst weiterhin bevorzugt eine oder mehrere Pumpen, um Frischwasser aus dem Frischwasserhahnbehälter zu den Spülelementen zu pumpen, und/oder um Brauchwasser umzuwälzen und ebenfalls den Spülelementen zuzuführen. Die Pumpen sind bevorzugt mit der Steuereinheit gekoppelt. Sind die Pumpen mit der Steuereinheit des Grillgeräts gekoppelt, ist ferner bevorzugt, dass die Steuereinheit dazu eingerichtet ist, von dem tragbaren Mobilgerät befähigt zum Steuern der Spülvorrichtung zu empfangen und in Antwort der Spülvorrichtung in Übereinstimmung mit den Befehlen zu steuern. Beispielsweise werden die Pumpen in Antwort auf einen entsprechenden Befehl eingeschaltet und der Spülvorgang gestartet. Dies kann dann durch einen Bediener von einem entfernten Ort aus geschehen, wodurch der Betrieb des Geräts wesentlich vereinfacht ist.

Gemäß einer weiteren bevorzugten Ausführungsform sind die Grillschalen doppelwandig mit einer ersten äußeren Wand und einer zweiten zu der ersten beabstandeten Wand ausgebildet. Die ersten und zweiten Wände können aus demselben Material ausgebildet sein. Vorzugsweise sind zwischen ersten und zweiten Wänden Abstandshalter vorgesehen. So ist beispielsweise denkbar, die ersten und zweiten Wände mittels einzelner Streben miteinander zu verbinden. Hierbei ist es aber vorteilhaft, möglichst wenig Wärmebrücken vorzusehen. Gleichzeitig soll aber eine stabile Konstruktion erreicht werden. Besonders bevorzugt sind die ersten und zweiten Wände an Endabschnitten, insbesondere im Bereich einer Grillfläche, miteinander verbunden. Hier können beispielsweise Lochbleche vorgesehen sein, um den Zwischenraum zwischen der ersten und zweiten Wand zu belüften.

Zwischen den Wänden kann ein erstes Dämmmaterial angeordnet sein. Vorzugsweise weist das erste Dämmmaterial eine Wärmeleitfähigkeit in einem Bereich von kleiner als 0,5 W/(mK), vorzugsweise kleiner 0,1 W/(mK), vorzugsweise in einem Bereich von 0,004 bis 0,045 W/(mK). Vorzugsweise wird als Dämmmaterial eine Glaswolle, Steinwolle, Mineralwolle, Vakuumdämmmaterial, Glasschaum, Blähbeton, oder dergleichen eingesetzt.

Das Dämmmaterial hat vorzugsweise eine Dicke in einem Bereich von 1 cm bis 5 cm, vorzugsweise 1 cm bis 3 cm, besonders bevorzugt 2 cm bis 3 cm. Das Dämmmaterial hat vorzugsweise eine im Wesentlichen gleichmäßige Dicke, sodass der Abstand zwischen der ersten und zweiten Wand ebenfalls in diesem Bereich ist. Neben dem ersten Dämmmaterial kann ein zweites Dämmmaterial zwischen der ersten und zweiten Wand vorgesehen sein. Das zweite Dämmmaterial kann in einer zweiten Schicht angeordnet sein, sodass in dem Zwischenraum zwischen der ersten und zweiten Wand das erste und zweite Dämmmaterial flächig aneinandergrenzen. Es kann auch vorgesehen sein, dass das zweite Dämmmaterial nur in einem Bereich vorgesehen ist, der besonders hohen Wärmeeintrag empfängt. Neben dem ersten und zweiten Dämmmaterial können auch dritte, vierte und so weiter Dämmmaterialien vorgesehen sein, um eine besonders gute Wärmedämmung zu erreichen.

Bereits die Doppelwandigkeit der Grillschalen führt zu einer Wärmedämmung. Vorzugsweise ist die Doppelwandigkeit der Grillschalen so ausgebildet, dass Luft in den Zwischenraum strömen kann. Hierdurch wird ein Verletzungsrisiko verringert, wenn Personen mit einem Außenbereich der Grillschalen in Kontakt kommen. Ferner kann auch auf diese Weise ein effektives Grillen verbessert werden, da weniger Wärmeverlust herrscht. Die Wärme bleibt besser innerhalb der Grillschale erhalten und wird auf das Grillgut geleitet. Hierdurch wird weniger Brennmaterial, bzw. weniger Energie beim Grillen verwendet, sodass auch die Umweltbelastung geringer ist und das Grillgerät insgesamt umweltfreundlich ausgebildet ist.

Gemäß einem weiteren Aspekt der Erfindung oder einer weiteren bevorzugten Ausführungsform weist das Grillgerät eine Getränke-Zapfeinrichtung auf, welche mit einem bevorzugt im Unterschrank angeordneten Getränkebehälter fluidleitend koppelbar und an einer Arbeitseinheit am Kopfende des Ständers angeordnet ist. Bevorzugt ist die Getränke-Zapfeinrichtung am oberen Ende des Ständers zwischen zwei Grilleinheiten angeordnet, die insbesondere an einander gegenüberliegenden Seiten des Ständers vorgesehen sind. Die fluidleitende Verbindung der Zapfeinrichtung mit dem bevorzugt innerhalb des Ständers angeordneten Getränkebehälter erfolgt mittels einer Fluidleitung, welche entsprechend mit dem Getränkebehälter koppelbare Anschlussmittel aufweist.

Gemäß einer bevorzugten Ausführungsform weist die Getränke-Zapfeinrichtung ein Zapfventil auf, welches mit einer korrespondierend ausgebildeten Getränkeaufnahme dazu eingerichtet ist, die Getränkeaufnahme vom Boden aus zu befüllen. Bevorzugt erfolgt das Befüllen der Getränkeaufnahme durch Aufstellen derselbigen auf das bevorzugt an der Arbeitseinheit des Grillgerätes angeordnete Zapfventil. Das Befüllen der Getränkeaufnahme kann selbsttätig durch Aufsetzen der Getränkeaufnahme auf das Zapfventil oder gesteuert durch Betätigen eines mit dem Zapfventil gekoppelten Tasters erfolgen. Bevorzugt wird ein magnetisch betätigtbares Zapfventil eingesetzt, dass in seine Offenstellung übergeht und dabei gleichzeitig auch einen am Boden der Getränkeaufnahme angeordneten Verschluss betätigt, über den das zu zapfende Getränk in die Getränkeaufnahme eingefüllt werden kann. Nach Beendigung des Zapfvorganges schließt das Zapfventil und der Verschluss am Boden der Getränkeaufnahme geht selbsttätig in seine abdichtende Verschlussstellung zurück.

Nachfolgend wird die Erfindung anhand eines Ausführungsbeispiels unter Bezugnahme auf die beiliegenden Figuren näher erläutert. Diese zeigen:
- Fig. 1:: eine perspektivische Ansicht des erfindungsgemäßen Grillgerätes,
- Fig. 2:: eine perspektivische Rückansicht des erfindungsgemäßen Grillgerätes nach Fig. 1, und
- Fig. 3:: eine Ansicht einer Grilleinheit und einer mit der Grilleinheit koppelbaren Zusatz-Grilleinheit des erfindungsgemäßen Grillgerätes.

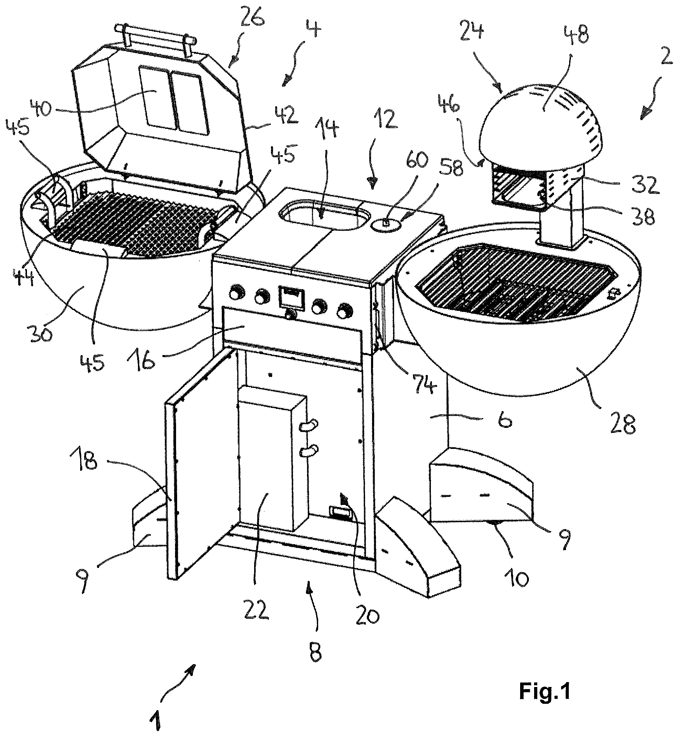

Das erfindungsgemäße Grillgerät 1 weist zwei Grilleinheiten 2, 4 auf, welche vorliegend im ausgeklappten Zustand zu beiden Seiten eines Ständer 6 angeordnet sind. Der Ständer 6 ist in Turmbauweise ausgeführt und umfasst einen innerhalb des Ständers ausgebildeten Unterschrank 8. Wie in Fig. 1 angedeutet, weist der Ständer seitlich abstehende Füße 9 auf, an denen Rollen 10 angeordnet, mittels denen das Grillgerät 1 in eine gewünschte Position bewegt werden kann.

Der Ständer 6 weist im Kopfbereich eine zentrale Arbeitseinheit 12 in Form einer Arbeitsplatte auf, in der eine Vertiefung 14 zum Aufnehmen von beispielsweise einer Schale vorgesehen ist. Unter der Arbeitseinheit 12 ist eine Kühleinheit 16 in Form eines an der Vorderseite des Unterschranks 8 ausziehbaren Kühlfachs angeordnet. Der Unterschrank 8 weist an seiner Vorderseite ein mittels einer Schwenktür 18 verschließbares Aufnahmefach 20 auf, innerhalb dessen eine Abluftreinigungseinrichtung 22 angeordnet ist. Die Abluftreinigungseinrichtung 22 ist mit den seitlich am Ständer 6 angeordneten Grilleinheiten 2, 4 fluidleitend zum Abführen von während des Garprozesses entstehenden Zubereitungs-Dämpfen oder Rauchgasen in Form eines Abluftstromes gekoppelt. Die Abluftreinigungseinrichtung 22 umfasst einen nicht näher gezeigten Abluftkanal und mindestens einen im Abluftkanal angeordneten Ventilator zum Erzeugen des Abluftstromes. Weiterhin umfasst die Abluftreinigungseinrichtung 22 einen im Abluftkanal angeordneten elektrostatischen Filter und eine Plasmakammer. Mittels des elektrostatischen Filters und der Plasmakammer erfolgt eine effektive Reinigung des Abluftstromes. Neben dem elektrostatischen Filter und der Plasmakammer können weitere Abluft-Behandlungselemente wie beispielsweise ein Schwammfilter oder ein Aktivkohlefilter im Abluftkanal angeordnet sein.

Das Grillgerät 1 weist bevorzugt an jeder der Grilleinheiten 2, 4 eine Zusatz-Grilleinheit 24, 26 auf, die jeweils mit einem Heizelement ausgerüstet sind, das dazu eingerichtet ist, das zuzubereitende Lebensmittel von seiner Oberseite aus zu grillen. Die Zusatz-Grilleinheiten 24, 26 sind jeweils an einer Grillschale 28, 30 der Grilleinheiten 2, 4 angeordnet.

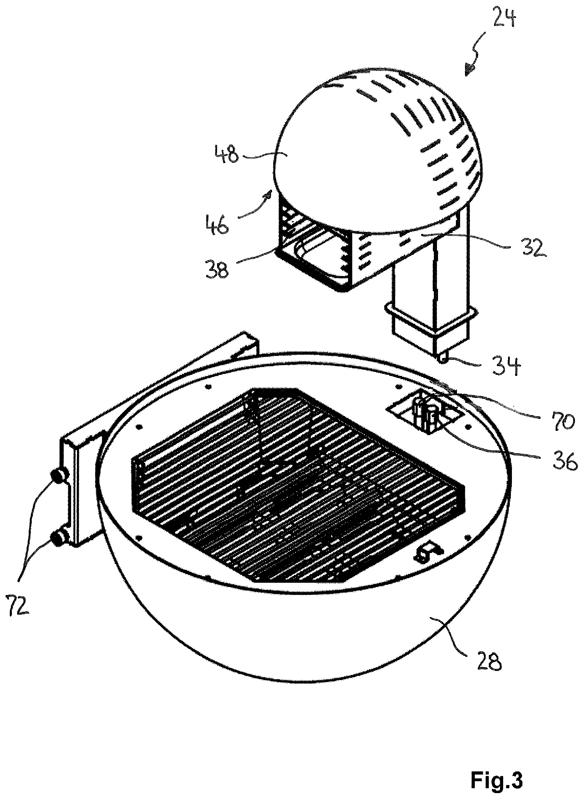

Die Zusatz-Grilleinheit 24 ist als ein auf die Grillschale aufsteckbarer Beefer-Aufsatz 32 ausgebildet. Der Beefer-Aufsatz 32 weist zumindest einen Gasanschluss 34 auf, der mit korrespondierenden Anschlussteilen 36 an der Grillschale 28 der Grilleinheit 2, wie näher zu Fig. 3 beschrieben, koppelbar ist. Der Beefer-Aufsatz 32 umfasst mehrere Einschübe 38 für ein das zuzubereitende Lebensmittel von der Unterseite aus tragendes Auflageteil.

Die Zusatz-Grilleinheit 26 weist einen Infrarot-Strahler 40 auf, der an einer Innenseite eines Deckels 42 angeordnet ist. Der Deckel 42 ist insbesondere an der Grillschale 30 der Grilleinheit 4 schwenkbar angeordnet. Der Deckel 42 kann somit zwischen einer in Fig. 1 gezeigten Offenstellung und in eine nicht näher gezeigte der Oberseite der Grilleinheit 4 angenäherte Position bewegt werden. Befindet sich der Deckel 42 in der geschlossenen Position, wird ein auf dem Grillgitter 44 befindliches Lebensmittel von seiner Oberseite aus gegart. Der Infrarot-Strahler 40 kann beispielsweise elektrisch betrieben werden. In der gezeigten Ausführung des erfindungsgemäßen Grillgerätes 1 weist Grillschale 30 der Grilleinheit 4 mehrere mit der Abluftreinigungseinrichtung 22 fluidleitend verbundene Einlässe 45 auf, die außenseitig um die Grilleinheit 4 herum angeordnet sind. Bevorzugt sind die Abluft-Einlässe 45 benachbart zu den Randbereichen des Deckels 44 angeordnet, wenn dieser in seiner geschlossenen Position ist.

Sämtliche an den Grilleinheiten 2, 4 verbauten Einzelteile sind an den Grilleinheiten entnehmbar ausgebildet und können somit einer vereinfachten Reinigung unterzogen werden. Die in Fig. 1 gezeigte Ausführungsform weist zudem oberhalb der Zusatz-Grilleinheit 24 eine Absaugung 46 auf, welche ebenfalls mit der Abluftreinigungseinrichtung 22 fluidleitend verbunden ist. Die Absaugung 46 weist eine über die Zusatz-Grilleinheit 24 hinweg ragende Absaugglocke 48 mit einer nach unten gerichteten Absaugöffnung auf.

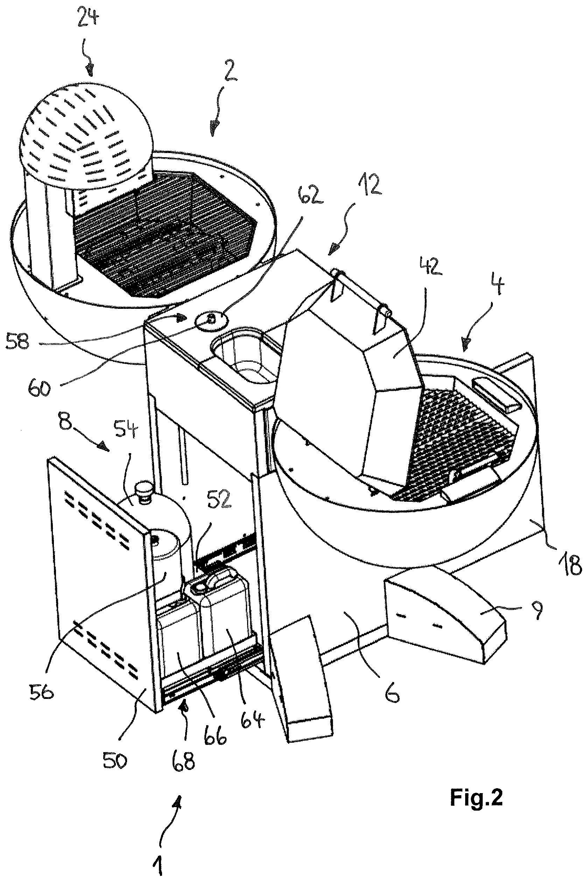

Fig. 2 zeigt eine Abbildung des Grillgerätes 1 von seiner Rückseite aus, wodurch ersichtlich wird, dass der Unterschrank 8 zu der Schwenktür 18 an der Vorderseite zusätzlich auf seiner Rückseite einen Auszug 50 aufweist. Der Auszug 50 ist mit einer Gasflaschenaufnahme 52 zum Tragen einer Gasflasche 54 ausgerüstet. Mittels der Gasflasche 54 erfolgt das Zuführen von Brenngas zu den Brenneinheiten der Grilleinheit 2, 4 und zumindest zu der als Beefer-Aufsatz 32 ausgebildeten Zusatz-Grilleinheit 24. Zudem ist im Auszug 50 eine Aufnahme für einen Getränkebehälter 56 vorgesehen. Der Getränkebehälter 56, wie zum Beispiel ein Bierfass, versorgt eine an der Arbeitseinheit 12 des Ständers 6 angeordnete Zapfeinrichtung 58. Die Zapfeinrichtung 58 ist über einen nicht näher dargestellten Getränkeschlauch mit dem Getränkebehälter 56 verbunden. Die Zapfeinrichtung 58 weist ein Zapfventil 60 auf, das dazu eingerichtet ist, mit einer nicht näher gezeigten korrespondierend ausgebildeten Getränkeaufnahme, wie beispielsweise einem Glas, die Getränkeaufnahme vom Boden aus zu befüllen. Die Zapfeinrichtung 58 weist eine Aufstellfläche 62 auf, in deren Mittenbereich das Zapfventil 60 vorsteht, das mit dem Boden der Getränkeaufnahme in fluidleitende Verbindung bringbar ist. Ferner sind auf dem Auszug 50 ein Frischwasserbehälter 64 und ein Brauchwasserbehälter 66 angeordnet, welche Teil einer erfindungsgemäßen Spülvorrichtung 68 zum Spülen und Reinigen des Grillgerätes 1 sind.

Wie Fig. 3 verdeutlicht, ist die Zusatz-Grilleinheit 24 als ein auf die Grillschale 28 der Grilleinheit 2 aufsteckbarer Beefer-Aufsatz 32 ausgebildet. Die aufsteckbare Zusatz-Grilleinheit 24 umfasst einen Gasanschluss 34, der mit einem Gas-Anschlussteil 36 an der Grillschale 28 medienleitend koppelbar ist. Ferner ist an der Grillschale 28 auch ein Abluft-Anschlussteil 70 vorgesehen, welches mit einem nicht abgebildeten Abluft-Anschluss an der Zusatz-Grilleinheit 24 mit dem Aufstecken der Zusatz-Grilleinheit auf die Grillschale 28 fluidleitend koppelbar ist. Wie Fig. 3 ferner zeigt, ist auch die gesamte Grillschale am Ständer 6 abnehmbar ausgebildet. Jede Grillschale 28, 30 weist eine Halterung 72 auf, welche mit einer an dem Ständer 6 korrespondierenden Aufnahme 74 (Fig. 1) reversibel koppel- und entkoppelbar ist.

Ähnliche oder gleiche Bauteile sind mit denselben Bezugszahlen bezeichnet.

Die Erfindung wird ferner beschrieben anhand der nachfolgenden Ausführungsbeispiele, worin:
Ausführungsbeispiel 1. Grillgerät (1), mit wenigstens einer Grilleinheit (2, 4), insbesondere Gasgrilleinheit, zum Garen von Lebensmitteln, und
   einem Ständer (6), der die Grilleinheit (2, 4) trägt, wobei die Grilleinheit (2, 4) eine Grillschale (28, 30) mit einer Brenneinheit aufweist,
   dadurch gekennzeichnet, dass der Grilleinheit (2, 4) eine Abluftreinigungseinrichtung (22) zum Abführen von während des Garprozesses entstehender Zubereitungs-Dämpfe oder Rauchgase in Form eines Abluftstromes zugeordnet ist.
Ausführungsbeispiel 2. Grillgerät (1) nach Ausführungsbeispiel 1,
   dadurch gekennzeichnet, dass die Abluftreinigungseinrichtung (22) in dem Ständer (6) oder außenseitig an dem Ständer (6) angeordnet ist, wobei vorzugsweise im Ständer (6) ein Unterschrank (8) untergebracht ist.
Ausführungsbeispiel 3. Grillgerät (1) nach Ausführungsbeispiel 2,
   wobei die Abluftreinigungseinrichtung (22) zumindest einen Abluftkanal mit einem Ventilator zum Abführen der Abluft von der Grilleinheit (2, 4) aufweist, wobei bevorzugt innerhalb des Abluftkanals zumindest ein elektrostatischer Filter und/oder eine Plasmakammer zur Abluftreinigung angeordnet ist.
Ausführungsbeispiel 4. Grillgerät (1) nach dem Oberbegriff von Ausführungsbeispiel 1 oder einem der vorstehenden Ausführungsbeispiele,
   wobei wenigstens eine Zusatz-Grilleinheit (24, 26) an der Grillschale (28, 30) vorgesehen ist, welche ein Heizelement aufweist, welches dazu eingerichtet ist, das Lebensmittel von seiner Oberseite aus zu grillen.
Ausführungsbeispiel 5. Grillgerät (1) nach Ausführungsbeispiel 4,
   wobei die Zusatz-Grilleinheit (24) als ein auf die Grillschale (28) aufsteckbarer Beefer-Aufsatz (32) ausgebildet ist, welcher bevorzugt wenigstens einen Gasanschluss (34) aufweist.
Ausführungsbeispiel 6. Grillgerät (1) nach Ausführungsbeispiel 5,
   dadurch gekennzeichnet, dass der Beefer-Aufsatz (32) mehrere übereinander angeordnete Einschübe (38) für ein das Lebensmittel von der Unterseite tragendes Auflageteil aufweist.
Ausführungsbeispiel 7. Grillgerät (1) nach einem der Ausführungsbeispiele 4 bis 6,
   wobei die Zusatz-Grilleinheit (26) als Infrarot-Strahler ausgebildet ist, der an einer Innenseite eines Deckels (42) angeordnet ist, mittels dessen die Grillschale (an ihrer Oberseite abdeckbar ist.
Ausführungsbeispiel 8. Grillgerät (1) nach einem der Ausführungsbeispiele 4 bis 7,
   dadurch gekennzeichnet, dass die Zusatz-Grilleinheit (24, 26) abluftleitend mit der Abluftreinigungseinrichtung (22) verbunden ist, wobei bevorzugt oberhalb der Zusatz-Grilleinheit (24) eine Absaugung mit einer nach unten gerichteten Absaugöffnung angeordnet ist.
Ausführungsbeispiel 9. Grillgerät (1) nach einem der vorstehenden Ausführungsbeispiele,
   wobei am Kopfende des Ständers (6) eine zentrale Arbeitseinheit (12) angeordnet ist, und zwei Grilleinheiten (2, 4) seitlich von der Arbeitseinheit im Wesentlichen gegenüberliegend zueinander an dem Ständer (6) befestigt sind, wobei bevorzugt jede der Grilleinheiten mit der Abluftreinigungseinrichtung (22) gekoppelt ist.
Ausführungsbeispiel 10. Grillgerät (1) nach einem der vorstehenden Ausführungsbeispiele,
   gekennzeichnet durch eine in dem Unterschrank (8) angeordnete Kühleinheit (16) zum Kühlen von rohem Grillgut und/oder eine in dem Unterschrank (8) angeordnete Warmhalteeinheit zum Warmhalten von Grillgut.
Ausführungsbeispiel 11. Grillgerät (1) nach einem der vorstehenden Ausfüh rungsbeispiele,
   gekennzeichnet durch eine Gasflaschenaufnahme (52) zum Tragen einer Gasflasche (54) zum Zuführen von Brenngas zu der Grilleinheit (2, 4) und der Zusatz-Grilleinheit (), wobei die Gasflaschenaufnahme (52) eine Wiegeeinheit zum Wiegen der Gasflasche (54) aufweist.
Ausführungsbeispiel 12. Grillgerät (1) nach einem der vorstehenden Ausführungsbeispiele,
   wobei die Grillschalen (28, 30) mittels einer Haube vollständig geschlossen abdeckbar sind, wobei die Hauben bevorzugt jeweils schwenkbar an der entsprechenden Grillschale (28, 30) befestigt sind und vorzugsweise eine Dämpfungseinrichtung zum Dämpfen der Bewegung der Hauben vorgesehen ist.
Ausführungsbeispiel 13. Grillgerät (1) nach einem der vorstehenden Ausführungsbeispiele,
   wobei die Grillschalen (28, 30) halbkugelförmig geformt sind, wobei die beiden Grillschalen (28, 30) bevorzugt mittels einer Mechanikeinheit zusammenschiebbar und/oder klappbar sind, um gemeinsam einen im Wesentlichen geschlossenen Raum zu bilden, und wobei vorzugsweise die Brenneinheiten in den Grillschalen (28, 30) auswechselbar sind zum Wechsel der Energiequelle.
Ausführungsbeispiel 14. Grillgerät (1) nach einem der vorstehenden Ausführungsbeispiele, mit
   wenigstens einem Einsatzelement, welches zwischen den Grillschalen (28, 30) anordenbar ist und einer Mehrzahl an Durchtrittsöffnungen aufweist, und/oder einer Spülvorrichtung (68) zum Spülen und Reinigen des Grillgeräts (1).
Ausführungsbeispiel 15. Grillgerät (1) nach dem Oberbegriff von Ausführungsbeispiel 1 oder einem der vorstehenden Ausführungsbeispiele,
   aufweisend eine Getränke-Zapfeinrichtung (58), welche mit einem bevorzugt im Unterschrank (8) angeordneten Getränkebehälter (56) fluidleitend koppelbar und an einer Arbeitseinheit (12) am Kopfende des Ständers (6) angeordnet ist.
Ausführungsbeispiel 16. Grillgerät (1) nach Ausführungsbeispiel 15,
   dadurch gekennzeichnet, dass die Getränke-Zapfeinrichtung (58) ein Zapfventil (60) aufweist, welches mit einer korrespondierend ausgebildeten Getränkeaufnahme dazu eingerichtet, die Getränkeaufnahme vom Boden aus zu befüllen.

### Bezuqszeichenliste

- 1: Grillgerät
- 2,4: Grilleinheit
- 6: Ständer
- 8: Unterschrank
- 9: Fuß
- 10: Rollen
- 12: Arbeitseinheit
- 14: Vertiefung
- 16: Kühleinheit
- 18: Schwenktür
- 20: Aufnahmefach
- 22: Abluftreinigungseinrichtung
- 24, 26: Zusatz-Grilleinheit
- 28, 30: Grillschale
- 32: Beefer-Aufsatz
- 34: Gasanschluss
- 36: Anschlussteil
- 38: Einschub
- 40: Infrarot-Strahler
- 42: Deckel
- 44: Grillgitter
- 45: Abluft-Einlässe
- 46: Absaugung
- 48: Absaugglocke
- 50: Auszug
- 52: Gasflaschenaufnahme
- 54: Gasflasche
- 56: Getränkebehälter
- 58: Zapfeinrichtung
- 60: Zapfventil
- 62: Aufstellfläche
- 64: Frischwasserbehälter
- 66: Brauchwasserbehälter
- 68: Spülvorrichtung
- 70: Abluft-Anschlussteil
- 72: Halterung
- 74: Aufnahme

## Patentansprüche

1. Grillgerät (1), mit
wenigstens einer Grilleinheit (2, 4), insbesondere Gasgrilleinheit, zum Garen von Lebensmitteln, und
einem Ständer (6), der die Grilleinheit (2, 4) trägt, wobei die Grilleinheit (2, 4) eine Grillschale (28, 30) mit einer Brenneinheit aufweist,
**gekennzeichnet durch** wenigstens eine Zusatz-Grilleinheit (24, 26) an der Grillschale (28, 30) vorgesehen ist, welche ein Heizelement aufweist, welches dazu eingerichtet ist, das Lebensmittel von seiner Oberseite aus zu grillen.

2. Grillgerät (1) nach Anspruch 1,
wobei die Zusatz-Grilleinheit (24) als ein auf die Grillschale (28) aufsteckbarer Beefer-Aufsatz (32) ausgebildet ist, welcher bevorzugt wenigstens einen Gasanschluss (34) aufweist.

3. Grillgerät (1) nach Anspruch 2,
**dadurch gekennzeichnet, dass** der Beefer-Aufsatz (32) mehrere übereinander angeordnete Einschübe (38) für ein das Lebensmittel von der Unterseite tragendes Auflageteil aufweist.

4. Grillgerät (1) nach einem der Ansprüche 1 bis 3,
wobei die Zusatz-Grilleinheit (26) als Infrarot-Strahler ausgebildet ist, der an einer Innenseite eines Deckels (42) angeordnet ist, mittels dessen die Grillschale (an ihrer Oberseite abdeckbar ist.

5. Grillgerät (1) nach einem der Ansprüche 1 bis 4,
**dadurch gekennzeichnet, dass** die Zusatz-Grilleinheit (24, 26) abluftleitend mit der Abluftreinigungseinrichtung (22) verbunden ist, wobei bevorzugt oberhalb der Zusatz-Grilleinheit (24) eine Absaugung mit einer nach unten gerichteten Absaugöffnung angeordnet ist.

6. Grillgerät (1) nach einem der vorstehenden Ansprüche,
dass der Grilleinheit (2, 4) eine Abluftreinigungseinrichtung (22) zum Abführen von während des Garprozesses entstehender Zubereitungs-Dämpfe oder Rauchgase in Form eines Abluftstromes zugeordnet ist.

7. Grillgerät (1) nach Anspruch 6,
**dadurch gekennzeichnet, dass** die Abluftreinigungseinrichtung (22) in dem Ständer (6) oder außenseitig an dem Ständer (6) angeordnet ist, wobei vorzugsweise im Ständer (6) ein Unterschrank (8) untergebracht ist.

8. Grillgerät (1) nach Anspruch 6 oder 7,
wobei die Abluftreinigungseinrichtung (22) zumindest einen Abluftkanal mit einem Ventilator zum Abführen der Abluft von der Grilleinheit (2, 4) aufweist, wobei bevorzugt innerhalb des Abluftkanals zumindest ein elektrostatischer Filter und/oder eine Plasmakammer zur Abluftreinigung angeordnet ist.

9. Grillgerät (1) nach einem der vorstehenden Ansprüche,
wobei am Kopfende des Ständers (6) eine zentrale Arbeitseinheit (12) angeordnet ist, und zwei Grilleinheiten (2, 4) seitlich von der Arbeitseinheit im Wesentlichen gegenüberliegend zueinander an dem Ständer (6) befestigt sind, wobei bevorzugt jede der Grilleinheiten mit der Abluftreinigungseinrichtung (22) gekoppelt ist.

10. Grillgerät (1) nach einem der vorstehenden Ansprüche,
**gekennzeichnet durch** eine in dem Unterschrank (8) angeordnete Kühleinheit (16) zum Kühlen von rohem Grillgut und/oder eine in dem Unterschrank (8) angeordnete Warmhalteeinheit zum Warmhalten von Grillgut.

11. Grillgerät (1) nach einem der vorstehenden Ansprüche,
**gekennzeichnet durch** eine Gasflaschenaufnahme (52) zum Tragen einer Gasflasche (54) zum Zuführen von Brenngas zu der Grilleinheit (2, 4) und der Zusatz-Grilleinheit (), wobei die Gasflaschenaufnahme (52) eine Wiegeeinheit zum Wiegen der Gasflasche (54) aufweist.

12. Grillgerät (1) nach einem der vorstehenden Ansprüche,
wobei die Grillschalen (28, 30) mittels einer Haube vollständig geschlossen abdeckbar sind, wobei die Hauben bevorzugt jeweils schwenkbar an der entsprechenden Grillschale (28, 30) befestigt sind und vorzugsweise eine Dämpfungseinrichtung zum Dämpfen der Bewegung der Hauben vorgesehen ist.

13. Grillgerät (1) nach einem der vorstehenden Ansprüche,
wobei die Grillschalen (28, 30) halbkugelförmig geformt sind, wobei die beiden Grillschalen (28, 30) bevorzugt mittels einer Mechanikeinheit zusammenschiebbar und/oder klappbar sind, um gemeinsam einen im Wesentlichen geschlossenen Raum zu bilden, und wobei vorzugsweise die Brenneinheiten in den Grillschalen (28, 30) auswechselbar sind zum Wechsel der Energiequelle.

14. Grillgerät (1) nach einem der vorstehenden Ansprüche, mit
wenigstens einem Einsatzelement, welches zwischen den Grillschalen (28, 30) anordenbar ist und einer Mehrzahl an Durchtrittsöffnungen aufweist, und/oder einer Spülvorrichtung (68) zum Spülen und Reinigen des Grillgeräts (1).

15. Grillgerät (1) nach dem Oberbegriff von Anspruch 1 oder einem der vorstehenden Ansprüche,
aufweisend eine Getränke-Zapfeinrichtung (58), welche mit einem bevorzugt im Unterschrank (8) angeordneten Getränkebehälter (56) fluidleitend koppelbar und an einer Arbeitseinheit (12) am Kopfende des Ständers (6) angeordnet ist.

16. Grillgerät (1) nach Anspruch 15,
**dadurch gekennzeichnet, dass** die Getränke-Zapfeinrichtung (58) ein Zapfventil (60) aufweist, welches mit einer korrespondierend ausgebildeten Getränkeaufnahme dazu eingerichtet, die Getränkeaufnahme vom Boden aus zu befüllen.
